# EUROPEAN PATENT SPECIFICATION

(11) **EP 4 322 121 B1**
(45) Date of publication and mention of the grant of the patent: **07.10.2026**
(21) Application number: 22784862.9
(22) Date of filing: 04.04.2022
(51) Int. Cl.: G06V 40/18, G06V 40/16, G06V 10/40

(54) **MACHINE-LEARNING-BASED EYE TRACKING DEVICE AND METHOD**
VORRICHTUNG UND VERFAHREN ZUR AUGENVERFOLGUNG AUF DER BASIS VON MASCHINELLEM LERNEN
DISPOSITIF ET PROCÉDÉ DE SUIVI OCULAIRE BASÉS SUR L'APPRENTISSAGE AUTOMATIQUE

(30) Priority: 08.04.2021 KR 20210045737
(43) Date of publication of application: 14.02.2024
(73) Proprietor: Emocog Co., Ltd., Seoul 08813 (KR)
(72) Inventor: NOH, Yoo Hun, Seoul 06346 (KR)
(74) Representative: Zacco Sweden AB
(86) International application number: PCT/KR2022/004627
(87) International publication number: WO 2022/215952

(56) References cited:
- WO-A1-2020/231401
- JP-A- 2003 271 932
- JP-A- 2007 265 367
- JP-B1- 6 745 518
- KR-A- 20150 117 553
- KR-A- 20190 040 797
- KR-B1- 101 819 164
- KR-B1- 101 819 164
- US-A1- 2015 293 588

## Description

### TECHNICAL FIELD

The present disclosure relates to gaze tracking technology, and more specifically, to a device and method for gaze-tracking based on machine learning.

### BACKGROUND ART

Gaze tracking technology is a technology that detects the position the user is looking at by measuring the movement of the eyeball. For the interface between the user and the computer, instead of the keyboard or the mouse, gaze tracking technology is mainly applied to pointing devices. The results output through the gaze tracking device is also being used as data to analyze the user's concentration level or to analyze the symptoms or progress patterns of diseases.

In general, gaze tracking devices use additional equipment such as an infrared camera, a high magnification zoom lens, or a webcam to obtain a pupil central point from the image of a user's eye, and a transformation function is applied based on the obtained result to perform gaze position tracking.

However, during the gaze position tracking, there is a need to wear a separate measuring device on the face, causing inconvenience to use the equipment. Also, due to the use of expensive equipment such as an infrared illuminator, the gaze tracking requires high costs.

In addition, due to the complexity of the gaze tracking calculation, processing speed and eye tracking performance are degraded.

The background technology of the present disclosure is published in Korean Patent No. 10-1094766.

Further, US 2015/293588 discloses a method and an apparatus of tracking an eye gaze to determine where a gaze point of a user is located on a display unit of a device, based on a facial pose and a position of an iris center. The method includes detecting a facial feature in a captured initial image, three-dimensionally modeling the detected facial feature, tracking the three-dimensionally modeled facial feature in consecutively captured images, detecting an iris center in the consecutivelycaptured images, acquiring an eye gaze vector based on the tracked three-dimensionally modeled facial feature and the detected iris center, and acquiring a gaze point on a display unit based on the eye gaze vector. Moreover, KR101819164 relates to an apparatus and a method for gaze tracking. The presented apparatus for gaze tracking comprises: an image acquiring unit acquiring a face image of a user; a face feature point extraction unit extracting face feature points from the acquired face image; a first gaze information tracking unit extracting feature points of the eyes and the mouth from the extracted face image and calculating a face plane and a normal vector of the face plane based thereon to track a face information based gaze vector; a second gaze information tracking unit extracting eye boundary feature points from the extracted face feature points and calculating the rotational center of an eyeball and the center of an iris based thereon to track an eye information based gaze vector; a gaze information integration unit integrating the tracked first and second gaze information; and a gaze tracking performing unit performing the gaze tracking by using the integrated gaze information.

### DESCRIPTION OF EMBODIMENTS

### TECHNICAL PROBLEM

The objective of the present disclosure is to provide a machine learning-based gaze tracking device that tracks gaze by using a camera module without a separate lighting device.

The objective of the present disclosure is to provide a machine learning-based gaze tracking device that tracks the location where the user's gaze and the display intersect each other by inferring gaze coordinates based on a regression model.

The technical objectives to be achieved by the present disclosure are not limited to the technical objectives described above, and other technical objectives not described above would be clearly understood from the description provided below by those having ordinary knowledge in the technical field to which the present disclosure belongs.

### SOLUTION TO PROBLEM

According to one aspect of the present disclosure, a machine learning-based gaze tracking device is provided.

A machine learning-based gaze tracking device according to an embodiment of the present disclosure may include an input unit for inputting an image containing the face, a feature point detection unit for detecting first feature points from the image containing the face, a face direction detection unit for detecting a direction of the face based on the detected first feature points, an eye-ball direction detection unit for detecting an eye-ball direction, which is a feature of the eye ball, from the detected first feature points, and a gaze tracking unit for performing gaze tracking by using the detected feature points, face direction, and a feature value of the eye-ball direction as an input for the trained eye tracking regression model.

According to another aspect of the present disclosure, a machine learning-based gaze tracking method is provided.

A machine learning-based gaze tracking method according to an embodiment of the present disclosure may include inputting an image containing the face, detecting first feature points from the image containing the face, detecting a the direction of the face based on the detected first feature points, detecting an eye-ball direction, which is a feature of the eye ball, from the detected first feature points, and performing gaze tracking by using the detected feature points, face direction, and a feature value of the eye-ball direction as an input for the trained eye tracking regression model.

### ADVANTAGEOUS EFFECTS OF DISCLOSURE

According to an embodiment of the present disclosure, a machine learning-based gaze tracking device can track gaze by using a camera module without a separate lighting device.

According to an embodiment of the present disclosure, a machine learning-based gaze tracking device may track a location where a user's gaze and a display intersect each other by inferring gaze coordinates based on a regression model.

The effects of the present disclosure are not limited to these effects, and it should be understood to include all effects that can be inferred from the disclosure described in the description or claims of the present disclosure.

### BRIEF DESCRIPTION OF DRAWINGS

FIGS. 1 to 9 are diagrams for explaining a machine learning-based gaze tracking device according to an embodiment of the present disclosure.
FIG. 10 is a diagram for explaining a machine learning-based gaze tracking method according to an embodiment of the present disclosure.

### MODE OF DISCLOSURE

Hereinafter, the present disclosure will be described with reference to the accompanying drawings. However, the present disclosure may be implemented in several different forms, and thus is not limited to the embodiments described herein. To clearly explain the present disclosure in the drawings, parts irrelevant to the description are omitted, and similar reference numerals are used to denote similar parts throughout the specification.

Throughout the specification, when a part is said to be "connected (contacted, coupled)" with another part, this expression includes not only "directly connected" but also "indirectly connected" with another part interposed therebetween. In addition, when a part "includes" a certain part, this expression includes a case where other parts may be further provided without excluding other parts unless stated otherwise.

The terminology used herein is used only to describe specific embodiments, and is not intended to limit the present disclosure. The singular expression includes the plural expression unless the context clearly indicates otherwise. The terms such as "comprise" or "include" are intended to designate that a feature, number, process, operation, component, part, or a combination thereof described in the specification exists, and a case where one or more other features, numbers, processes, operations, components, parts, or a combination thereof exist or are added, is not excluded in advance.

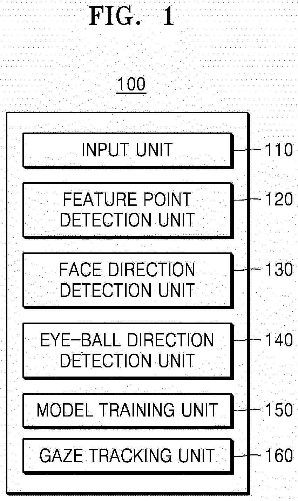

FIGS. 1 to 9 are diagrams for explaining a machine learning-based gaze tracking device according to an embodiment of the present disclosure.

Referring to FIG. 1, a machine learning-based gaze tracking device 100 includes an input unit 110, a feature point detection unit 120, a face direction detection unit 130, an eye-ball direction detection unit 140, a model training unit 150, and a gaze tracking unit 160.

The input unit 110 may input an image including a face. For example, the input unit 110 inputs an image including a face obtained through a web camera or an RGB camera.

The feature point detection unit 120 detects first feature points from the image including the face. Herein, the first feature points may be detected as coordinates in a three-dimensional space by using a 3DFFA model.

The face direction detection unit 130 detects the direction of the face based on the detected feature points. In an embodiment, the face direction detection unit 130 extracts, from the detected first feature points, second feature points whose position do not change even when facial expression changes or movement occurs.

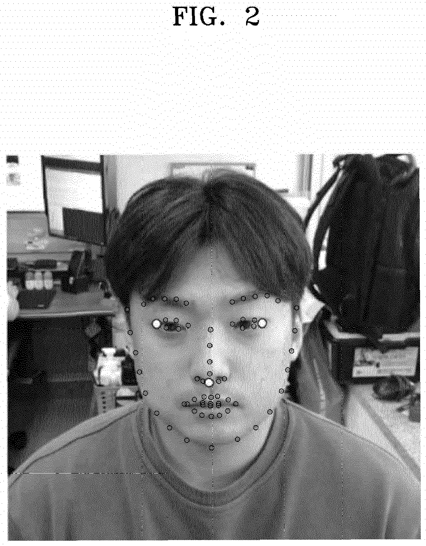

For example, as shown in FIG. 2, the face direction detection unit 130 may extract, from the first feature points detected in the image of the face, the outer corners of the eyes and the philtrum starting point, as the second feature points.

The face direction detection unit 130 detects a plane with respect to the position and direction of the face based on the extracted second feature points. Herein, the face direction detection unit 130 may calculate a normal vector perpendicular to the plane for the position and direction of the detected face.

The face direction detection unit 130 may detect a 3-dimensional vector for the direction of the face based on the calculated normal vector.

The eye-ball direction detection unit 140 may detect the direction of the eye ball by extracting, from the first feature points detected by the feature point detection unit 120, third feature points, which is a feature point of the eye-ball. The eye-ball direction detection unit 140 may include a rotational center calculation unit 141, an iris center calculation unit 143, and a center connection unit 145.

The feature point detection unit 120, the face direction detection unit 130, the eye-ball direction detection unit 140, the model training unit 150, and the gaze tracking unit 160 may be implemented by at least one processor. The processor may control the operation of the gaze tracking device 100 by executing programs stored in the memory in the gaze tracking device 100.

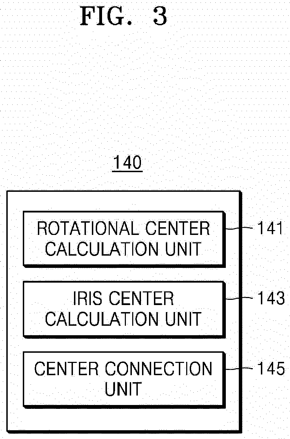

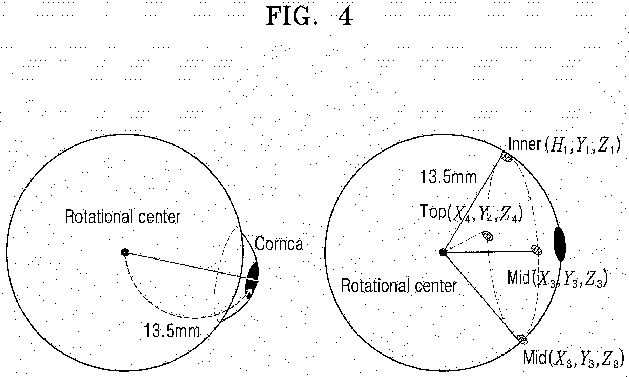

Referring to FIG. 3, the rotational center calculation unit 141 may extract, from the first feature points detected by the feature point detection unit 120, the third feature points, which is a feature point of the eye-ball, and may use the third feature points to calculate the rotational center of the eye-ball. For example, the rotational center calculation unit 141 may calculate the rotational center of the eye-ball by using extracted four third feature points (Inner, Mid, Top, Outer) as shown in FIG. 4.

The iris center calculation unit 143 may calculate the center of the iris based on the inclination in the eye region of the image of the face. For example, the iris center calculation unit 143 may detect the central point of the iris and the iris center coordinates based on the inclination in the eye region of the image of the face. Specifically, the iris center calculation unit 143 may use template matching to detect an iris central point through a pixel inclination at an iris boundary in an eye region. According to template matching, an average template of the region to be found is built, and the correlation between the template and an input image is used to find a matching position. According to the present disclosure, through the correlation between a template filter and the pixel inclination in the eye region, the pixel position having the highest value in the eye region is detected as the central point of the iris and expressed as coordinates.

In another embodiment, the iris center calculation unit 143 may detect the iris central point and the iris central coordinates by using a deep learning algorithm such as Fast RCNN.

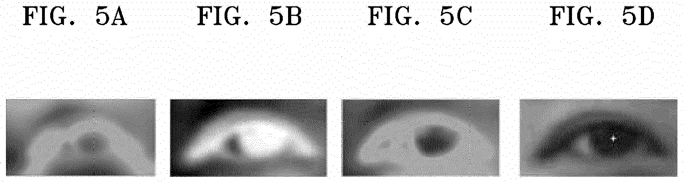

Referring to FIG. 5, the iris center calculation unit 143 may extract the pixel position having the highest value in the eye region through the correlation between the template filter and the pixel inclination in the eye region (a). Herein, the iris center calculation unit 143 may perform filtering using an image of which pixel values are inverted, in order to filter the region under the iris, which has a high value due to the curve of the eyelid (b). The iris center calculation unit 143 may detect the position having the highest pixel value as the iris central point by reflecting the filtering result (c, d).

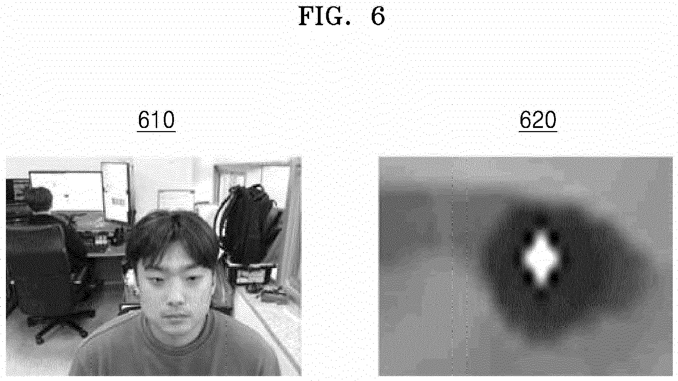

Referring to FIG. 6, the iris center calculation unit 143 may detect the iris central point from the RGB image of the face (610), and after extracting the eye region from the image of the face, perform inclination-based iris central point detection to detect the central point (620).

Referring back to FIG. 3, the center connection unit 145 detects a three-dimensional vector with respect to the eye-ball direction by connecting the rotational center coordinates of the eye-ball and the iris center coordinates.

The rotational center calculation unit 141, the iris center calculation unit 143, and the center connection unit 145 may be implemented by at least one processor.

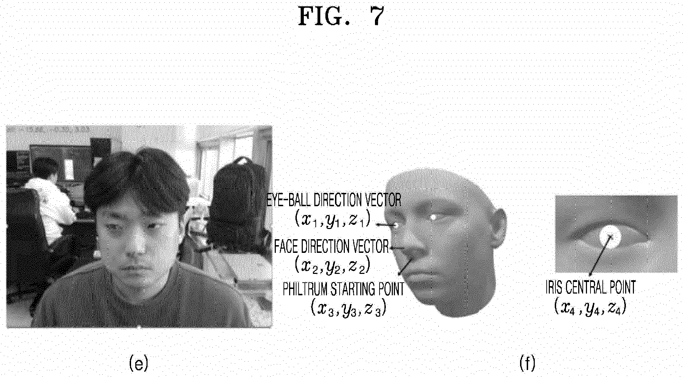

Referring to FIG. 7, the model training unit 150 trains a gaze tracking model by using the previously detected gaze feature values as an input. The model training unit 150 trains the gaze tracking model by using the philtrum starting point and face direction vector detected by the face direction detection unit 130, the iris central point detected by the iris center calculation unit 143, and the eye-ball direction vector detected by the center connection unit 145, as an input (e). In detail, the model training unit 150 trains the gaze tracking model by using, as an input, an eye-ball direction vector (x1, y1, z1), a face direction vector (x2, y2, z2), a philtrum starting point (x3, y3, z3), and an iris central point (x4, y4, z4) (f).

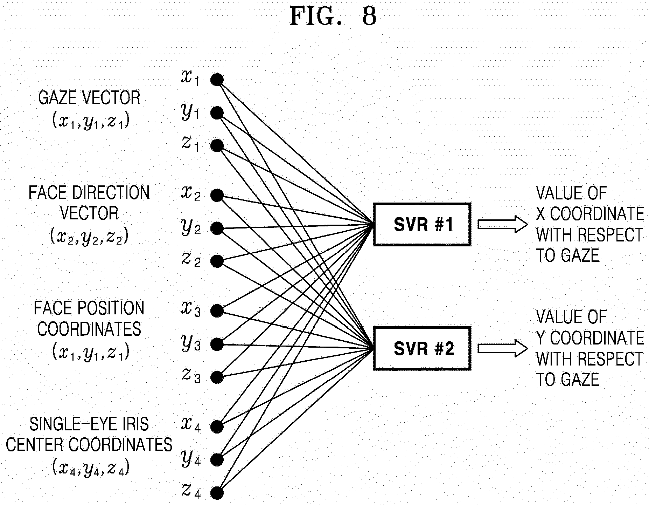

The model training unit 150 may train a support vector regression (SVR) as a gaze tracking model as shown in FIG. 8. Support vector regression (SVR), which is a gaze tracking regression model, is a machine learning-based model that is extended from support vector machine (SVM) so as to be used for regression analysis. SVR performs gaze tracking by using a regression function. The model training unit 150 may train a first support vector regression (SVR #1) and a second support vector regression (SVR #2).

In another embodiment, the model training unit 150 may use a regression model capable of deriving x and y values at once.

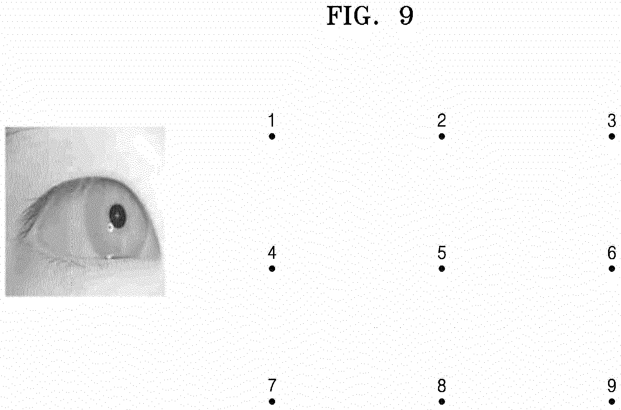

Herein, the model training unit 150 may train support vector regression by using the gaze feature value detected through the calibration process as an input. That is, the model training unit 150 may train the x-coordinate and y-coordinate of the position of gaze to be displayed on a display by using the philtrum starting point, the face direction vector, the iris central point, and the eye-ball direction vector which are detected when the gaze is directed to the 9 calibration points as shown in FIG. 9.

The model training unit 150 may learn the x-coordinate and y-coordinate, which are the position of the gaze, by using Equation 1 below. [Equation 1] $\begin{matrix}f \left(x\right) = {W}^{T} x + b \\ x = \left(\begin{matrix}{x}_{1} {x}_{2} {x}_{3} {x}_{4} \\ {y}_{1} {y}_{2} {y}_{3} {x}_{4} \\ {z}_{1} {z}_{2} {z}_{3} {x}_{4}\end{matrix}\right) , y = \left(x, y\right)\end{matrix}$

Herein, x represents a matrix of a total of 12 feature values of x, y, and z coordinates of the philtrum starting point, the face direction vector, the iris central point, and the eye-ball direction vector which are to be input, and y represents coordinates on the display according to the input. *W^{I}* denotes a regression model parameter that converts an input value into gaze coordinates, and Equation 2 below is used to obtain a regression model parameter that minimizes loss. [Equation 2] $\begin{matrix}min \frac{1}{2} {\left‖w\right‖}^{2} + C {\sum }_{i = 1}^{n} \left({ξ}_{i}+{ξ}_{i}^{∗}\right) \\ s . t . \left({w}^{T}{x}_{i}+b\right) - {y}_{i} \leq ϵ + {ξ}_{i} \\ {y}_{i} - \left({w}^{T}{x}_{i}+b\right) \leq ϵ + {ξ}_{i}^{∗} \\ {ξ}_{i} {ξ}_{i}^{∗} \geq 0\end{matrix}$

The gaze tracking unit 160 may perform gaze tracking by using the model trained by the model training unit 150. The gaze tracking unit 160 uses the trained regression model so as to address the degrees of freedom that may arise during a projection transformation process that calculates gaze coordinates on the monitor plane in two-dimensional space by using the user's face and eye movements in the 3-dimensional space, thereby performing semi-permanent gaze tracking.

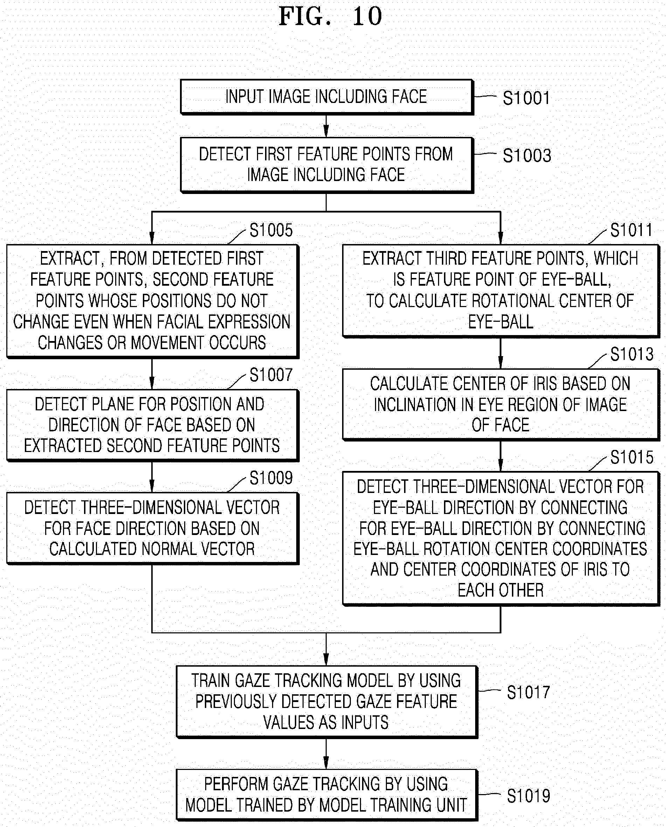

FIG. 10 is a diagram for explaining a machine learning-based gaze tracking method according to an embodiment of the present disclosure.

Referring to FIG. 10, in operation S1001, the machine learning-based gaze tracking apparatus 100 inputs an image including a face. For example, the machine learning-based gaze tracking device 100 may input an image including a face obtained through a web camera or an RGB camera.

In operation S1003, the machine learning-based gaze tracking device 100 detects first feature points from the image including the face. Here, the first feature points may be detected as coordinates in a three-dimensional space by using a 3DFFA model.

In operation S1005, the machine learning-based gaze tracking device 100 extracts, from the detected first feature points, second feature points whose positions do not change even when facial expression changes or movement occurs. For example, the machine learning-based gaze tracking device 100 may extract, from the first feature points detected in the image of the face, the outer corners of the eyes and the philtrum starting point, as the second feature points.

In operation S1007, the machine learning-based gaze tracking device 100 may detect a plane for the position and direction of the face based on the extracted second feature points. Here, the machine learning-based gaze tracking device 100 may calculate a normal vector perpendicular to the plane for the position and direction of the detected face.

In operation S1009, the machine learning-based gaze tracking device 100 may detect a three-dimensional vector for the direction of the face based on the calculated normal vector.

In operation S1011, the machine learning-based gaze tracking device 100 may extract from the first feature points detected by the feature point detection unit 120, the third feature points, which is a feature point of the eye-ball, and may use the third feature points to calculate the rotational center of the eye-ball. For example, the machine learning-based gaze tracking device 100 may calculate the rotational center of the eye-ball by using extracted four third feature points (Inner, Mid, Top, Outer) as shown in FIG. 4.

In operation S1013, the machine learning-based gaze tracking device 100 may calculate the center of the iris based on the inclination in the eye region of the image of the face. Specifically, the machine learning-based gaze tracking device 100 may extract the position of the pixel having the highest value in the eye region through the correlation between the template filter and the pixel inclination in the eye region. Herein, the machine learning-based gaze tracking device 100 may perform filtering using an image of which pixel values are inverted, in order to filter the region under the iris, which has a high value due to the curve of the eyelid. The machine learning-based gaze tracking device 100 may detect the position having the highest pixel value as the iris central point by reflecting the filtering result.

In operation S1015, the machine learning-based gaze tracking device 100 detects a three-dimensional vector for the eye-ball direction by connecting the eye-ball rotational center coordinates and the center coordinates of the iris to each other.

In operation S1017, the machine learning-based gaze tracking device 100 may train the gaze tracking model by using the previously detected gaze feature values as an input. In detail, the model training unit 150 may train the gaze tracking model by using, as an input, an eye-ball direction vector (x1, y1, z1), a face direction vector (x2, y2, z2), a philtrum starting point (x3, y3, z3), and an iris central point (x4, y4, z4) (f).

The machine learning-based gaze tracking device 100 may train support vector regression (SVR) as a gaze tracking model. SVR, which is a gaze tracking regression model, is a machine learning-based model that is extended from support vector machine (SVM) so as to be used for regression analysis. SVR performs gaze tracking by using a regression function. The machine learning-based gaze tracking device 100 may train a first support vector regression (SVR #1) and a second support vector regression (SVR #2).

Here, the machine learning-based gaze tracking device 100 may train support vector regression by using the gaze feature value detected through the calibration process as an input. That is, the machine learning-based gaze tracking device 100 may learn the x-coordinate and y-coordinate of the position of gaze to be displayed on a display by using the philtrum starting point, the face direction vector, the iris central point, and the eye-ball direction vector which are detected when the gaze is directed to the 9 calibration points as shown in FIG. 9.

In operation S1019, the machine learning-based gaze tracking device 100 performs gaze tracking by using the model trained by the model training unit 150. The machine learning-based gaze tracking device 100 uses the trained regression model so as to address the degrees of freedom that may arise during a projection transformation process that calculates gaze coordinates on the monitor plane in two-dimensional space by using the user's face and eye movements in the 3-dimensional space, thereby performing semi-permanent gaze tracking.

The processor may be embodied by using at least one of electric units for performing application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other functions.

The memory may include: a random access memory (RAM), such as dynamic random access memory (DRAM), static random access memory (SRAM), or the like; or read-only memory (ROM), electrically erasable programmable read-only memory (EEPROM), CD-ROM, blue ray or other optical disk storage, a hard disk drive (HDD), a solid state drive (SSD), or a flash memory.

The description of the present disclosure provided above is for illustration only, and it would be understood that those having ordinary knowledge in the technical field to which the present disclosure belongs could easily transform the same into other specific forms without changing the technical concept or essential characteristics of the present disclosure. Therefore, it should be understood that the embodiments described above are examples in all respects and not restricted. For example, each component described as being a single type may be implemented in a dispersed form, and likewise, components described as being distributed may also be implemented in a combined form.

The scope of the present disclosure is indicated by the following claims, and all changes or modifications derived from the meaning and scope of the claims and their equivalent concepts should be construed as being included in the scope of the present disclosure.

## Claims

1. A machine learning-based gaze tracking device (100) comprising:
an input unit (110) configured to input an image including a face;
a feature point detection unit (120) configured to detect first feature points in the image including the face;
a face direction detection unit (130) configured to detect a direction of the face based on the detected first feature points;
an eye-ball direction detection unit (140) configured to detect an eye-ball direction, which is a feature of an eye-ball, from the detected first feature points;
a model training unit (150) configured to train a gaze tracking model by using the detected first feature points, the direction of the face and the eye-ball direction; and
a gaze tracking unit (160) configured to perform gaze tracking by using the trained gaze tracking model,
wherein the face direction detection unit (130) extracts, from the first feature points, second feature points, whose positions do not change even when facial expression changes or movement occurs, and detects the direction of the face based on the second feature points.

2. The machine learning-based gaze tracking device of claim 1, wherein the second feature points comprises outer corners of the eyes and/or a philtrum starting point.

3. The machine learning-based gaze tracking device of claim 1, wherein
the eye-ball direction detection unit (140) is configured to further include:
a rotational center calculation unit (141) extracts, from the first feature points detected by the feature point detection unit (120), third feature points, which is a feature point of the eye-ball, and uses the third feature points to calculate a rotational center of an eye-ball;
an iris center calculation unit (143) configured to calculate the center of an iris in an eye region of the image of the face; and
a center connection unit (145) configured to detect a three-dimensional vector for the eye-ball direction by connecting the rotational center of the eye-ball and the center of the iris.

4. The machine learning-based gaze tracking device of claim 3, wherein
the iris center calculation unit (143) detects an iris central point and center coordinates of the iris based on the inclination in the eye region.

5. A machine learning-based gaze tracking method comprising:
inputting (S1001) an image including a face;
detecting (S1003) first feature points in the image including the face;
detecting a direction of the face based on the detected first feature points;
detecting an eye-ball direction, which is a feature of an eye-ball, from the detected first feature points; and
performing (S1019) gaze tracking by using the detected first feature points, the direction of the face, and the eye-ball direction feature values as an input to a trained gaze tracking regression model,
wherein detecting a direction of the face based on detected first feature points comprises:
extracting (S1005), from the first feature points, second feature points, whose positions do not change even when facial expressions changes or movement occurs; and
detecting (S1007) the direction of the face based on the second feature points.

6. The machine learning-based gaze tracking method of claim 5, wherein the second feature points comprises outer corners of the eyes and/or a philtrum starting point.

7. The machine learning-based gaze tracking method of claim 5, wherein
detecting an eye-ball direction, which is a feature of an eye-ball, from the detected first feature points comprises:
extracting(S1011), from the detected first feature points, third feature points, which is a feature of the eye-ball detected by the feature point detection unit, and calculating the rotational center of the eye-ball by using the third feature points;
calculating (S1013) the center of an iris in an eye region of the image of the face; and
detecting (S1015) a three-dimensional vector for the eye-ball direction by connecting the rotational center of the eye-ball and the center of the iris to each other.

8. The machine learning-based gaze tracking method of claim 7, wherein
the calculating the center of the iris in the eye region of the image of the face comprises
detecting an iris central point and center coordinates of the iris based on an inclination in the eye region.

9. A computer program recorded on a computer-readable recording medium, executing the machine learning-based gaze tracking method of any one of claims 5 to 8.

## Patentansprüche

1. Vorrichtung (100) zur Blickverfolgung auf der Basis von maschinellem Lernen, umfassend:
eine Eingabeeinheit (110), die dazu konfiguriert ist, ein Bild, das ein Gesicht beinhaltet, einzugeben;
eine Merkmalspunkterkennungseinheit (120), die dazu konfiguriert ist, erste Merkmalspunkte in dem Bild, welches das Gesicht beinhaltet, zu erkennen;
eine Gesichtsrichtungserkennungseinheit (130), die dazu konfiguriert ist, eine Richtung des Gesichts auf der Basis der erkannten ersten Merkmalspunkte zu erkennen;
eine Augapfelrichtungserkennungseinheit (140), die dazu konfiguriert ist, eine Augapfelrichtung, die ein Merkmal eines Augapfels ist, anhand der ersten Merkmalspunkte zu erkennen;
eine Modelltrainingseinheit (150), die dazu konfiguriert ist, ein Blickverfolgungsmodell unter Verwendung der erkannten ersten Merkmalspunkte, der Richtung des Gesichts und der Augapfelrichtung zu trainieren; und
eine Blickverfolgungseinheit (160), die dazu konfiguriert ist, Blickverfolgung unter Verwendung des trainierten Blickverfolgungsmodells durchzuführen,
wobei die Gesichtsrichtungserkennungseinheit (130), anhand der ersten Merkmalspunkte, zweite Merkmalspunkte extrahiert, deren Positionen sich nicht verändern, selbst wenn sich der Gesichtsausdruck ändert oder eine Bewegung auftritt, und die Richtung des Gesichts auf der Basis der zweiten Merkmalspunkte erkennt.

2. Vorrichtung zur Blickverfolgung auf der Basis von maschinellem Lernen nach Anspruch 1, wobei die zweiten Merkmalspunkte äußere Augenwinkel und/oder einen Philtrum-Ausgangspunkt umfasst.

3. Vorrichtung zur Blickverfolgung auf der Basis von maschinellem Lernen nach Anspruch 1, wobei
die Augapfelrichtungserkennungseinheit (140) dazu konfiguriert ist, ferner Folgendes zu beinhalten:
eine Drehmittelpunktberechnungseinheit (141) extrahiert, anhand der ersten Merkmalspunkte, die durch die Merkmalspunkterkennungseinheit (120) erkannten werden, dritte Merkmalspunkte, die ein Merkmalspunkt des Augapfels ist, und verwendet die dritten Merkmalspunkte, um einen Drehmittelpunkt eines Augapfels zu berechnen;
eine Irismittelpunktberechnungseinheit (143), die dazu konfiguriert ist, den Mittelpunkt einer Iris in einem Augenbereich des Bilds des Gesichts zu berechnen; und
eine Mittelpunktsverbindungseinheit (145), die dazu konfiguriert ist, einen dreidimensionalen Vektor für die Augapfelrichtung durch Verbinden des Drehmittelpunkts des Augapfels und des Mittelpunkts der Iris zu erkennen.

4. Vorrichtung zur Blickverfolgung auf der Basis von maschinellem Lernen nach Anspruch 3, wobei
die Irismittelpunktberechnungseinheit (143) einen Irismittelpunkt und Mittelpunktskoordinaten der Iris auf der Basis der Neigung in dem Augenbereich erkennt.

5. Verfahren zur Blickverfolgung auf der Basis von maschinellem Lernen, umfassend:
Eingeben (S1001) eines Bilds, das ein Gesicht beinhaltet;
Erkennen (S1003) von ersten Merkmalspunkten in dem Bild, welches das Gesicht beinhaltet;
Erkennen einer Richtung des Gesichts auf der Basis der erkannten ersten Merkmalspunkte;
Erkennen einer Augapfelrichtung, die ein Merkmal eines Augapfels ist, anhand der erkannten ersten Merkmalspunkte; und
Durchführen (S1019) von Blickverfolgung unter Verwendung der erkannten ersten Merkmalspunkte, der Richtung des Gesichts und der Augapfelrichtungsmerkmalswerte als eine Eingabe in ein trainiertes Blickverfolgungsregressionsmodell,
wobei das Erkennen einer Richtung des Gesichts auf der Basis der erkannten ersten Merkmalspunkte Folgendes umfasst:
Extrahieren (S1005), anhand der ersten Merkmalspunkte, von zweiten Merkmalspunkten, deren Positionen sich nicht verändern, selbst wenn sich der Gesichtsausdruck ändert oder eine Bewegung auftritt; und
Erkennen (S1007) der Richtung des Gesichts auf der Basis der zweiten Merkmalspunkte.

6. Verfahren zur Blickverfolgung auf der Basis von maschinellem Lernen nach Anspruch 5, wobei die zweiten Merkmalspunkte äußere Augenwinkel und/oder einen Philtrum-Ausgangspunkt umfasst.

7. Verfahren zur Blickverfolgung auf der Basis von maschinellem Lernen nach Anspruch 5, wobei
das Erkennen einer Augapfelrichtung, die ein Merkmal eines Augapfels ist, anhand der erkannten ersten Merkmalspunkte Folgendes umfasst:
Extrahieren(S1011), anhand der erkannten ersten Merkmalspunkte, von dritten Merkmalspunkten, die ein Merkmal des Augapfels ist, das durch die Merkmalspunkterkennungseinheit erkannt wird, und Berechnen des Drehmittelpunkts des Augapfels unter Verwendung der dritten Merkmalspunkte;
Berechnen (S1013) des Mittelpunkts einer Iris in einem Augenbereich des Bilds des Gesichts; und
Erkennen (S1015) eines dreidimensionalen Vektors für die Augapfelrichtung durch Verbinden des Drehmittelpunkts des Augapfels und des Mittelpunkts der Iris miteinander.

8. Verfahren zur Blickverfolgung auf der Basis von maschinellem Lernen nach Anspruch 7, wobei
das Berechnen des Mittelpunkts der Iris in dem Augenbereich des Bilds des Gesichts Folgendes umfasst:
Erkennen eines Irismittelpunkts und von Mittelpunktskoordinaten der Iris auf der Basis einer Neigung in dem Augenbereich.

9. Computerprogramm, das auf einem computerlesbaren Aufzeichnungsmedium aufgezeichnet wird und das Verfahren zur Blickverfolgung auf der Basis von maschinellem Lernen nach einem der Ansprüche 5 bis 8 ausführt.

## Revendications

1. Dispositif de suivi oculaire basé sur l'apprentissage automatique (100) comprenant :
une unité d'entrée (110) configurée pour recevoir en entrée une image incluant un visage ;
une unité de détection de points caractéristiques (120) configurée pour détecter des premiers points caractéristiques dans l'image incluant le visage ;
une unité de détection de direction de visage (130) configurée pour détecter une direction du visage sur la base des premiers points caractéristiques détectés ;
une unité de détection de direction de globe oculaire (140) configurée pour détecter une direction du globe oculaire, laquelle est une caractéristique d'un globe oculaire, à partir des premiers points caractéristiques détectés ;
une unité d'entraînement de modèle (150) configurée pour entraîner un modèle de suivi oculaire en utilisant les premiers points caractéristiques détectés, la direction du visage et la direction du globe oculaire ; et
une unité de suivi oculaire (160) configurée pour effectuer un suivi oculaire en utilisant le modèle de suivi oculaire entraîné,
dans lequel l'unité de détection de direction de visage (130) extrait, à partir des premiers points caractéristiques, des deuxièmes points caractéristiques, dont les positions ne changent pas même lorsqu'un changement d'expression faciale ou un mouvement se produit, et détecte la direction du visage sur la base des deuxièmes points caractéristiques.

2. Dispositif de suivi oculaire basé sur l'apprentissage automatique selon la revendication 1, dans lequel les deuxièmes points caractéristiques comprennent les coins externes des yeux et/ou un point de départ du philtrum.

3. Dispositif de suivi oculaire basé sur l'apprentissage automatique selon la revendication 1, dans lequel
l'unité de détection de direction de globe oculaire (140) est configurée pour comprendre en outre :
une unité de calcul de centre de rotation (141) qui extrait, à partir des premiers points caractéristiques détectés par l'unité de détection de points caractéristiques (120), des troisièmes points caractéristiques, qui sont des points caractéristiques du globe oculaire, et qui utilise les troisièmes points caractéristiques pour calculer le centre de rotation d'un globe oculaire ;
une unité de calcul de centre d'iris (143) configurée pour calculer le centre d'un iris dans une région oculaire de l'image du visage ; et
une unité de liaison de centres (145) configurée pour détecter un vecteur tridimensionnel pour la direction du globe oculaire en reliant le centre de rotation du globe oculaire et le centre de l'iris.

4. Dispositif de suivi oculaire basé sur l'apprentissage automatique selon la revendication 3, dans lequel
l'unité de calcul de centre d'iris (143) détecte un point central de l'iris et des coordonnées de centre de l'iris sur la base d'une inclinaison dans la région oculaire.

5. Procédé de suivi oculaire basé sur l'apprentissage automatique comprenant les étapes consistant à :
recevoir en entrée (S1001) une image incluant un visage ;
détecter (S1003) des premiers points caractéristiques dans l'image incluant le visage ;
détecter une direction du visage sur la base des premiers points caractéristiques détectés ;
détecter une direction du globe oculaire, laquelle est une caractéristique d'un globe oculaire, à partir des premiers points caractéristiques détectés ; et
effectuer (S1019) un suivi oculaire en utilisant les premiers points caractéristiques détectés, la direction du visage et des valeurs caractéristiques de direction du globe oculaire en tant qu'entrées d'un modèle de régression de suivi oculaire entraîné,
dans lequel la détection d'une direction du visage sur la base des premiers points caractéristiques détectés comprend les étapes consistant à :
extraire (S1005), à partir des premiers points caractéristiques, des deuxièmes points caractéristiques, dont les positions ne changent pas même lorsqu'un changement d'expression faciale ou un mouvement se produit ; et
détecter (S1007) la direction du visage sur la base des deuxièmes points caractéristiques.

6. Procédé de suivi oculaire basé sur l'apprentissage automatique selon la revendication 5, dans lequel les deuxièmes points caractéristiques comprennent les coins externes des yeux et/ou un point de départ du philtrum.

7. Procédé de suivi oculaire basé sur l'apprentissage automatique selon la revendication 5, dans lequel
la détection d'une direction du globe oculaire, laquelle est une caractéristique d'un globe oculaire, à partir des premiers points caractéristiques détectés comprend les étapes consistant à :
extraire (S1011), à partir des premiers points caractéristiques détectés, des troisièmes points caractéristiques, qui constituent une caractéristique du globe oculaire détectée par l'unité de détection de points caractéristiques, et calculer le centre de rotation du globe oculaire en utilisant les troisièmes points caractéristiques ;
calculer (S1013) le centre d'un iris dans une région oculaire de l'image du visage ; et
détecter (S1015) un vecteur tridimensionnel pour la direction du globe oculaire en reliant le centre de rotation du globe oculaire et le centre de l'iris l'un à l'autre.

8. Procédé de suivi oculaire basé sur l'apprentissage automatique selon la revendication 7, dans lequel
le calcul du centre de l'iris dans la région oculaire de l'image du visage comprend la détection d'un point central de l'iris et des coordonnées du centre de l'iris sur la base d'une inclinaison dans la région oculaire.

9. Programme d'ordinateur enregistré sur un support d'enregistrement lisible par ordinateur, pour exécuter le procédé de suivi oculaire basé sur l'apprentissage automatique selon l'une quelconque des revendications 5 à 8.
